# EUROPEAN PATENT APPLICATION

(11) **EP 4 390 709 A1**
(43) Date of publication of application: **26.06.2024**
(21) Application number: 22871448.1
(22) Date of filing: 31.05.2022
(51) Int. Cl.: G06F 13/40

(54) **METHOD AND APPARATUS FOR ALLOCATING PCIE DEVICE IDENTIFIER, AND RELATED DEVICE**

(30) Priority: 26.09.2021 CN 202111131780
(71) Applicant: Huawei Technologies Co., Ltd., Shenzhen, Guangdong 518129 (CN)
(72) Inventor: CHENG, Yongguang, Shenzhen, Guangdong 518129 (CN)
(74) Representative: Huawei European IPR
(86) International application number: PCT/CN2022/096110
(87) International publication number: WO 2023/045387

(57) **Abstract**

A method for allocating a PCIE device identifier is provided. A computing device obtains a correspondence between a to-be-allocated PCIE device identifier and an identifier of a port on the computing device, and the correspondence is persistent in the computing device. Then, the computing device determines a first port that connects a first PCIE device to the computing device, and allocates an identifier to the first PCIE device based on an identifier of the first port and the obtained correspondence. Because the computing device allocates identifiers to PCIE devices based on the persistently stored correspondence between the identifier of the port and the to-be-allocated PCIE device identifier, the computing device allocates same identifiers to the PCIE devices every time, so that the identifiers allocated to the PCIE devices are constant, thereby preventing the identifiers allocated by the computing device to the PCIE devices from changing and affecting access of services run on the computing device to the PCIE devices.

## Description

This application claims priority to Chinese Patent Application No. 202111131780.X, filed with the China National Intellectual Property Administration on September 26, 2021 and entitled "METHOD AND APPARATUS FOR ALLOCATING PCIE DEVICE IDENTIFIER, AND RELATED DEVICE", which is incorporated herein by reference in its entirety.

### TECHNICAL FIELD

This application relates to the field of computer technologies, and in particular, to a method and apparatus for allocating a PCIE device identifier, and a related device.

### BACKGROUND

Generally, in an actual application scenario, for a computing device (for example, a server) that supports a peripheral component interconnect express (peripheral component interconnect express, PCIE) standard, a plurality of PCIE devices may be externally connected to the computing device. For example, components, such as a network interface card and a hard disk, are externally connected to the computing device. When started, an operating system in the computing device usually allocates identifiers to the PCIE devices on the computing device. For example, the computing device may allocate different serial numbers to different externally connected PCIE devices as names of the PCIE devices.

However, each time identifiers allocated to the connected PCIE devices may change after the computing device is restarted to run, resulting in impact on access of services run on the computing device to the PCIE devices. Therefore, how to enable the computing device to allocate constant identifiers to the PCIE devices every time becomes an important problem that needs to be urgently resolved.

### SUMMARY

This application provides a method and apparatus for allocating a PCIE device, a computing device, a computer-readable storage medium, and a computer program product, to allocate constant identifiers to PCIE devices, thereby avoiding affecting access of services run on the computing device to the PCIE devices as much as possible.

According to a first aspect, a method for allocating a PCIE device identifier is provided. The method can be executed by a computing device. During specific implementation, the computing device obtains a correspondence between a to-be-allocated PCIE device identifier and an identifier of a port on the computing device, and the correspondence is persistent in the computing device. Then, the computing device determines a first port that connects a first PCIE device to the computing device, and allocates an identifier to the first PCIE device based on an identifier of the first port and the obtained correspondence.

The first PCIE device may be any PCIE device connected to the computing device, so that the computing device can allocate constant identifiers to connected PCIE devices by looking up the correspondence.

Because the computing device allocates identifiers to PCIE devices based on the persistently stored correspondence between the identifier of the port and the to-be-allocated PCIE device identifier, the computing device allocates same identifiers to the PCIE devices every time, so that the identifiers allocated to the PCIE devices are constant, thereby preventing the identifiers allocated by the computing device to the PCIE devices from changing and affecting access of services on the computing device to the PCIE devices.

In a possible implementation, when allocating an identifier to the first PCIE device, the computing device may specifically first look up the correspondence based on the identifier of the first port to obtain the identifier allocated to the first PCIE device, write the identifier allocated to the first PCIE device into a temporary storage area in the computing device, and then register, by using a driver of the first PCIE device, the identifier of the first PCIE device stored in the temporary storage area with an operating system of the computing device. In this way, the computing device allocates the identifier to the first PCIE device.

In another possible implementation, the temporary storage area configured to store the identifier of the first PCIE device may be a register based on a PCI standard or a PCIE standard.

Optionally, the temporary storage area may also be a register based on another standard protocol, or may be a cache area or the like.

In another possible implementation, before obtaining the correspondence, the computing device may persistently store the correspondence in advance. In a specific implementation, the computing device may obtain a configuration file. The configuration file includes the correspondence between the to-be-allocated PCIE device identifier and the identifier of the port on the computing device, so that the computing device can persistently store the obtained configuration file. In this way, the computing device can persistently store the correspondence.

In another possible implementation, the configuration file obtained by the computing device may be specified by a user. Specifically, the computing device may generate the configuration file based on a configuration operation performed by the user for the correspondence in a configuration interface; or the computing device may receive a configuration file imported by the user. In this way, the user may specify the identifiers allocated by the computing device to the PCIE devices, so that flexibility of specifying the PCIE device identifier by the user can be improved. In addition, when the correspondence on the computing device is configured by the user, the user may customize an identifier of a PCIE device based on an actual application requirement, so that hardware design difficulty of the computing device can be reduced.

In another possible implementation, the computing device may autonomously generate a configuration file. Specifically, the computing device may obtain historical allocation data. The historical allocation data includes a port through which the computing device is connected to a PCIE device in a historical period of time and an identifier allocated to the PCIE device in the historical period of time, so that the computing device may generate a configuration file based on the historical allocation data. For example, the computing device may generate, based on a record of allocating a PCIE device identifier for the first time, a configuration file including the correspondence, so that the computing device may subsequently guide, based on the identifier allocated to the PCIE device for the first time, allocation of the identifier for the PCIE device in each restart process.

In another possible implementation, the computing device may further present an interaction interface, and the interaction interface includes the correspondence. In this way, the user may query, on the interaction interface, identifiers allocated by the computing device to PCIE devices, to reduce difficulty of subsequent operation and maintenance performed by the user on the computing device 100, and improve the efficiency of operation and maintenance.

According to a second aspect, this application further provides an apparatus for allocating a PCIE device identifier. The apparatus allocating a PCIE device identifier includes modules configured to perform the method for allocating a PCIE device identifier according to the first aspect or any possible implementation of the first aspect.

According to a third aspect, this application further provides a computing device, including a processor and a memory. The memory is configured to store instructions. When the computing device runs, the processor executes the instructions stored in the memory, to enable the computing device to perform the method for allocating a PCIE device identifier according to the first aspect or any implementation of the first aspect. It should be noted that the memory may be integrated into the processor, or may be independent of the processor. The computing device may further include a bus. The processor is connected to the memory by the bus. The memory may include a readable memory and a random access memory.

According to a fourth aspect, this application provides a computer-readable storage medium. The computer-readable storage medium stores instructions. When run on a computer, the instructions enable the computer to perform the operation steps of the method according to the first aspect or any implementation of the first aspect.

According to a fifth aspect, this application provides a computer program product including instructions. When run on a computer, the computer program product enables the computer to perform the operation steps of the method according to the first aspect or any implementation of the first aspect.

In this application, based on the implementations according to the foregoing aspects, the implementations may be combined to provide more implementations.

### BRIEF DESCRIPTION OF DRAWINGS

FIG. 1 is a schematic diagram of an example of an application scenario according to this application;
FIG. 2 is a schematic diagram of a computing device 100 allocating identifiers to PCIE devices before and after a port 1 fails;
FIG. 3 is a schematic flowchart of a method for allocating a PCIE device identifier according to this application;
FIG. 4 is a schematic diagram of a configuration interface according to this application;
FIG. 5 is a schematic diagram of adjusting a hardware design of a computing device 100;
FIG. 6 is a schematic diagram of a structure of a computing device 100 according to this application;
FIG. 7 is a schematic flowchart of another method for allocating a PCIE device identifier according to this application;
FIG. 8 is a schematic diagram of a register based on a PCI standard;
FIG. 9 is a schematic diagram of a structure of an apparatus for allocating a PCIE device identifier according to this application; and
FIG. 10 is a schematic diagram of a hardware structure of a computing device according to this application.

### DESCRIPTION OF EMBODIMENTS

The following describes the technical solutions in this application with reference to accompanying drawings in embodiments of this application.

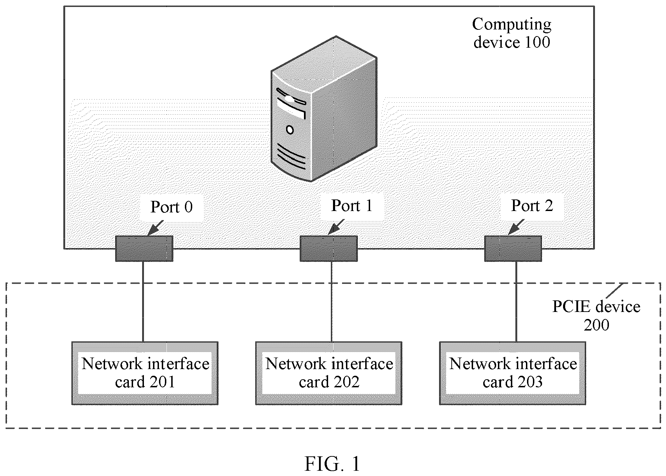

FIG. 1 is a schematic diagram of an application scenario according to this application. As shown in FIG. 1, the application scenario may include a computing device 100 and a PCIE device 200. The computing device 100 may be a device having a data processing capability. The computing device 100 being a server is used as an example in FIG. 1. In an actual application, the computing device 100 may also be another device. Generally, a plurality of ports may be arranged on the computing device 100, and the computing device 100 may use these ports to externally connect to one or more PCIE devices 200. FIG. 1 is described by using an example in which three ports (a port 0, a port 1, and a port 2) are arranged on the computing device 100. In an actual application, any quantity of ports may be arranged on the computing device 100. This is not limited in this application. The PCIE device 200 may be a device that supports a PCIE standard. After being connected to the computing device 100, the PCIE device 200 is configured to provide a specific function for the computing device 100, for example, a network interface card 201, a network interface card 202, a network interface card 203, and the like shown in FIG. 1. The computing device 100 is externally connected to the network interface card 201 by the port 0, to the network interface card 202 by the port 1, and to the network interface card 203 by the port 2.

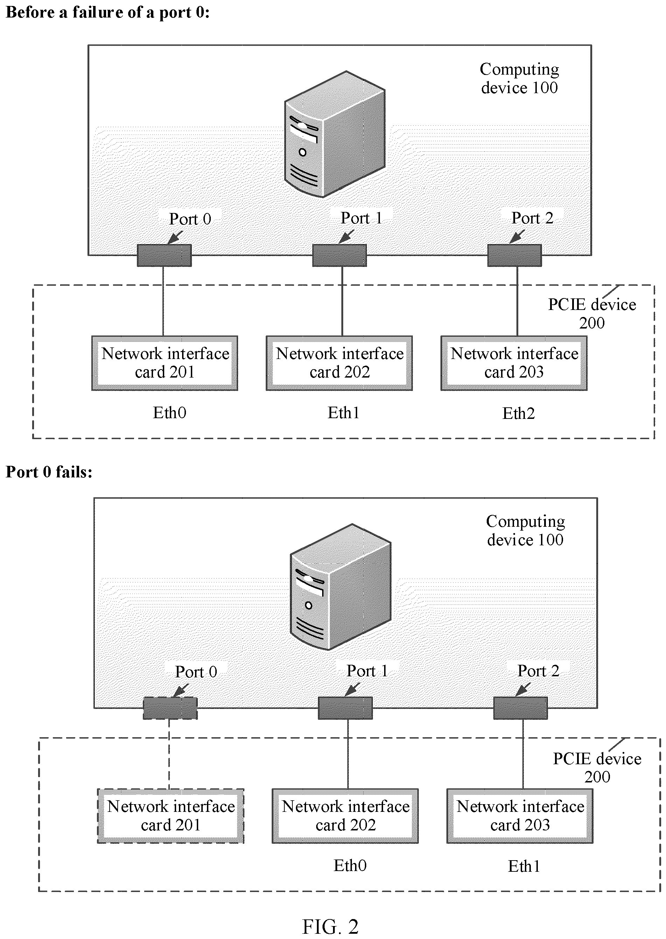

In each startup process, the computing device 100 generally allocates identifiers to externally connected PCIE devices 200. As shown in the upper part of FIG. 2, the computing device 100 names the network interface card 201, the network interface card 202, and the network interface card 203 as "eth0", "eth1", "eth2", and the like sequentially. In this way, in a moving process, the computing device 100 may access a corresponding PCIE device 200 based on the allocated PCIE device identifier, to perform a corresponding function, for example, access the network interface card 201 based on "eth0", to send interaction data to another device through the network interface card 201.

In this case, if the computing device 100 dynamically allocates identifiers to the PCIE devices 200 sequentially based on a traversal sequence for the PCIE devices 200 each time the computing device 100 is started, the identifiers allocated by the computing device 100 to the PCIE devices 200 are not persistent. Therefore, when the computing device 100 is restarted, for example, the computing device 100 is restarted and recovers after a failure or periodically performs a restart operation (for operation and maintenance of the computing device 100), the identifiers allocated by the computing device 100 to the PCIE devices 200 may change. For example, as shown in the lower part of FIG. 2, when the port 0 on the computing device 100 fails, the computing device 100 reallocates the identifier "eth0" to the network interface card 202 externally connected by the port 1, and reallocates the identifier "eth1" to the network interface card 203 externally connected by the port 2. In this case, the identifiers allocated to the network interface card 202 and the network interface card 203 change, to be specific, the identifier allocated to the network interface card 202 is adjusted from "eth1" to "eth0", and the identifier allocated to the network interface card 203 is adjusted from "eth2" to "eth1". In this way, when a service resumed on the computing device 100 needs to access the network interface card 203 externally connected by the port 2, because the identifier allocated to the network interface card 203 is adjusted from "eth2" to "eth1", an error may occur when the service accesses the PCIE device. This leads to a longer delay of the service resumed on the computing device 100, a communication data error in the service resumed on the computing device 100, or the like.

Based on this, this application provides a method for allocating a PCIE device identifier, to keep the identifiers of the PCIE devices 200 externally connected to the computing device 100 persistent. During specific implementation, before the computing device 100 allocates an identifier to a PCIE device, a correspondence between an identifier of a port on the computing device 100 and a to-be-allocated PCIE device identifier is persistently stored in the computing device 100 in advance. In this way, the computing device 100 may obtain the correspondence from a local persistent storage area, and determine ports connecting the computing device 100 to PCIE devices. Then, the computing device 100 can allocate, based on the port and the correspondence, corresponding identifiers to the PCIE devices 200 currently connected to the computing device 100. Because the computing device 100 allocates identifiers to PCIE devices based on the persistently stored correspondence between the identifier of the port and the to-be-allocated PCIE device identifier, the computing device 100 allocates same identifiers to the PCIE devices 200 every time, so that the identifiers allocated to the PCIE devices 200 are constant, thereby preventing the identifiers allocated by the computing device 100 to the PCIE devices 200 from changing and affecting services on the computing device 100.

For example, assuming that the correspondence persistently stored in the computing device 100 is specifically [(port 0, eth0), (port 1, eth1), (port 2, eth2)], when the computing device 100 is started for the first time, based on the correspondence, an identifier allocated to the network interface card 201 connected by the port 0 is "eth0", an identifier allocated to the network interface card 202 connected by the port 12 is "eth1", and an identifier allocated to the network interface card 203 connected by the port 2 is "eth2". However, when the computing device 100 is started for the second time, even if the port 0 fails, the computing device 100 still allocates, based on the correspondence, the identifier "eth1" to the network interface card 202, and the identifier "eth2" to the network interface card 203. In this way, the identifiers allocated to the PCIE devices 200 in every restart process of the computing device 100 can be constant, thereby preventing the failure of the port 0 from causing the identifier allocated to the network interface card 202 connected by the port 1 and the identifier allocated to the network interface card 203 connected by the port 2 to change.

For example, the computing device 100 may be implemented through a device such as a server. Specifically, one or more processors are arranged in a server that constitutes the computing device 100, and are, for example, implemented by using a central processing unit (central processing unit, CPU) or an application-specific integrated circuit (application-specific integrated circuit, ASIC), or implemented by using a programmable logic device (programmable logic device, PLD). The PLD may be a complex programmable logic device (complex programmable logic device, CPLD), an FPGA, a generic array logic (generic array logic, GAL), or any combination thereof. In another possible implementation, in addition to the foregoing hardware form using a server as an example, the computing device 100 may also be implemented through a terminal.

It should be noted that the application scenario shown in FIG. 1 is merely used as an example for description. In an actual application, this application may also be applied to another scenario to which this application is applicable. For example, in another possible scenario, other ports may be further arranged on the computing device 100, and the computing device 100 may be connected to more PCIE devices, for example, PCIE devices such as a sound card, a graphics processing unit, and a hard disk, by the other ports. Alternatively, the computing device 100 may further be externally connected to an interaction device. For example, the computing device 100 receives, through the interaction device, a correspondence configured by a user.

With reference to the accompanying drawings, the following further describes a process of allocating an identifier to a PCIE device connected to the computing device 100 according to this application.

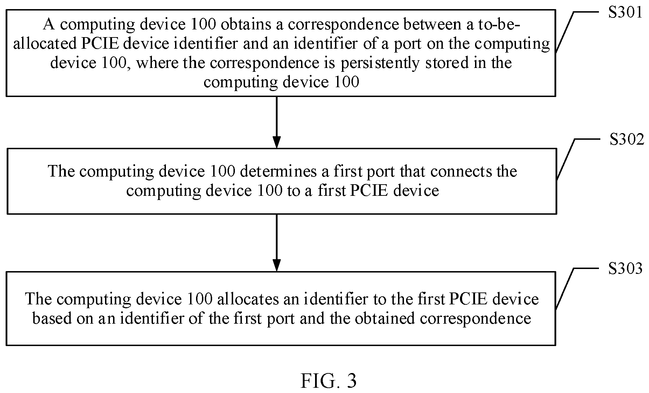

FIG. 3 is a schematic flowchart of a method for allocating a PCIE device identifier according to an embodiment of this application. The method may be applied to the application scenario shown in FIG. 1, and specifically, the method may be performed by the computing device 100 in FIG. 1. As shown in FIG. 3, the method may specifically include the following steps.

Step S301: The computing device 100 obtains a correspondence between a to-be-allocated PCIE device identifier and an identifier of a port on the computing device 100, where the correspondence is persistently stored in the computing device 100.

In this embodiment, before the computing device 100 allocates an identifier to one or more connected PCIE devices 200, the correspondence between the to-be-allocated PCIE device identifier and the identifier of the port on the computing device 100 may be persistently stored in the computing device 100 in advance. The to-be-allocated PCIE device identifier in the correspondence may be, for example, a name, a descriptor, or the like that is subsequently allocated to the PCIE device 200. The port in the correspondence is a port that connects the computing device 100 to the PCIE device 200. Correspondingly, the identifier of the port may be, for example, a port number or a port name.

In a possible implementation, the computing device 100 may obtain a configuration file including the correspondence, and persistently store the configuration file in a local storage area. The correspondence in the configuration file may be configured by a user. For example, the configuration file may be a mapping table between the to-be-allocated PCIE device identifier and the identifier of the port on the computing device 100.

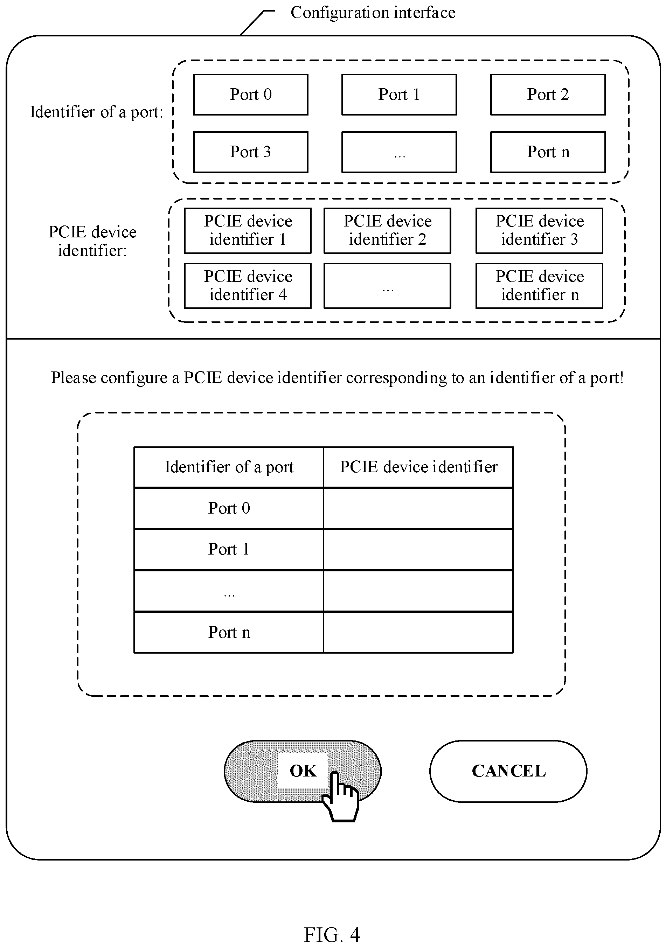

In an implementation example, a display element, such as a display, may be integrated into the computing device 100, so that the computing device 100 can present a configuration interface for the correspondence. Alternatively, the computing device 100 may be connected to another display device, for example, be remotely connected to a terminal device used by a user, so that the computing device 100 may present a configuration interface to the user through the display device. The configuration interface presented to the user may include identifiers of a plurality of ports that are on the computing device 100 and that can be configured to connect to the PCIE device 200, and a plurality of identifiers that are predefined by the computing device 100 and that are for being allocated to the PCIE device, as shown in FIG. 4. In this way, the user may perform configuration in the configuration interface for the correspondence between the identifiers of the plurality of ports and the identifiers that are for being to the PCIE devices. In this way, the computing device 100 may generate, based on a configuration operation performed by the user, a configuration file including the correspondence, and persistently store the configuration file in the computing device 100.

In the foregoing example, the computing device 100 may generate the correspondence based on the configuration operation performed by the user. In another possible example, the user may directly import the correspondence to the computing device 100. Specifically, the computing device 100 may be integrated with a baseboard manager controller (baseboard manager controller, BMC), and the BMC may externally provide an interface for data communication. In this way, the user may establish, by using a corresponding device, a communication connection with the BMC based on the interface, and import the configuration file including the correspondence to the BMC through the interface. Then, the computing device 100 can persistently store the configuration file imported by the user.

In the foregoing two implementation examples, the correspondence may be defined by the user. In still another possible implementation, the correspondence may further be automatically generated by the computing device 100. Specifically, the computing device 100 obtains historical allocation data. The historical allocation data includes a port through which the computing device 100 is connected to a PCIE device in a historical period of time and an identifier allocated to the PCIE device in the historical period of time. For example, the historical allocation data may be identifiers, recorded by the computing device 100 in a first start process, allocated to externally connected PCIE devices and ports configured to connect the PCIE devices to the computing device 100. During specific implementation, the computing device 100 may traverse the ports configured to connect to the PCIE devices, and sequentially allocate, based on a traversal sequence, the identifiers to the PCIE devices externally connected to the computing device 100. For example, assuming that the computing device 100 determines, through traversal, that a quantity of ports is 10, which are respectively a port 0 to a port 9, identifiers allocated by the computing device 100 to the PCIE devices connected through the ports based on the port traversal sequence may be "eth0", "eth1 ", ..., and "eth9" sequentially. Then, the computing device 100 can record the identifiers of the ports configured to externally connect to the PCIE devices and the identifier allocated by the computing device 100 to the PCIE devices, and establish a correspondence between the identifiers of the ports and the allocated PCIE device identifiers. For example, a PCIE device identifier corresponding to the port 0 is "eth0", and a PCIE device identifier corresponding to the port 9 is "eth9". In this way, the computing device 100 can keep the generated correspondence consistent.

Further, the computing device 100 may present the automatically generated correspondence to the user. For example, the computing device 100 may present an interaction interface to the user through a display element thereon, or present an interaction interface to the user through another display device. The interaction interface may include the correspondence automatically generated by the computing device 100. In this way, the user may query, on the interaction interface, identifiers allocated by the computing device 100 to PCIE devices, to reduce difficulty of subsequent operation and maintenance performed by the user on the computing device 100, and improve the efficiency of operation and maintenance.

After the correspondence is persistently stored, when the computing device 100 is started and runs, the computing device 100 can read the correspondence from the persistent storage area, to subsequently allocate constant identifiers to connected PCIE devices 200 based on the persistently stored correspondence.

Step S302: The computing device 100 determines a first port that connects the computing device 100 to a first PCIE device.

For ease of understanding and description, in this embodiment, an example in which the computing device 100 allocates an identifier to one of the PCIE devices is used for description. The PCIE device is referred to as a first PCIE device below, and a port connecting the computing device 100 to the first PCIE device is referred to as a first port below.

In a specific implementation, the computing device 100 may traverse (or referred to as enumerate) ports on the computing device 100 in a start process, to determine the first port that connects the computing device 100 to the first PCIE device. For example, the computing device 100 may use a depth-first algorithm to start to traverse from one of root ports, and after traversing all PCIE devices at the root port, traverse a next root port. In this way, the computing device 100 may determine, in the traversal process, the first port that connects the computing device 100 to the first PCIE device. In an actual application, the computing device 100 may also determine, in another manner, the first port that connects the computing device 100 to the first PCIE device. This is not limited in this embodiment.

Step S303: The computing device 100 allocates an identifier to the first PCIE device based on an identifier of the first port and the obtained correspondence.

After determining the first port, the computing device 100 may look up the obtained correspondence based on the identifier of the first port, to obtain a to-be-allocated PCIE device identifier corresponding to the identifier of the first port, so that the computing device 100 may allocate the found identifier to the first PCIE device. In an actual application, when allocating the identifier to the first PCIE device, the computing device 100 may specifically register the identifier with an operating system of the computing device 100.

It should be noted that, in this embodiment, an example in which the computing device 100 allocates the identifier to the first PCIE device is used for description. In an actual application scenario, the computing device 100 may be connected to a plurality of PCIE devices. In this case, for each PCIE device, the computing device 100 may allocate an identifier to the PCIE device through a process a similar to the foregoing process. For example, assuming the computing device 100 is connected to both the first PCIE device and a second PCIE device, while allocating the identifier to the first PCIE device based on the foregoing process, the computing device 100 can determine a second port that connects the computing device 100 to the second PCIE device, so that the computing device 100 may look up the correspondence based on an identifier of the second port, to obtain a to-be-allocated PCIE device identifier corresponding to the identifier of the second port, and allocate the identifier to the second PCIE device.

Because the computing device 100 allocates the identifier (or identifiers) to the first PCIE device (and the second PCIE device) based on the persistently stored correspondence between the identifier of the port and the to-be-allocated PCIE device identifier, identifiers allocated by the computing device 100 to the PCIE devices every time may be consistent, thereby preventing the identifiers allocated by the computing device 100 to the PCIE devices from changing and affecting access of services on the computing device 100 to the PCIE devices.

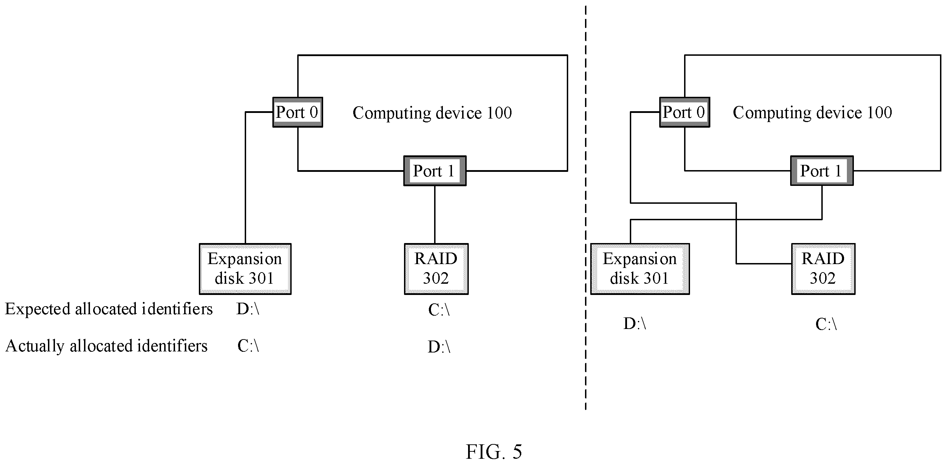

In addition, when the correspondence on the computing device 100 is configured by the user, the user may customize an identifier of a PCIE device based on an actual application requirement, so that hardware design difficulty of the computing device 100 can be reduced. For example, as shown in FIG. 5, for the computing device 100 shown on the left side of FIG. 5, the computing device 100 is connected to an expansion disk 301 (which is a type of PCIE device) by a port 0, and is connected, by a port 1, to a redundant array of independent hard disks (redundant array of independent disks, RAID) 302 including a plurality of hard disks. It is assumed that the user expects to use the RAID 302 as a system disk, and expects that an identifier allocated by the computing device 100 to the RAID 302 is "C:\", and an identifier allocated by the computing device 100 to the expansion disk 301 is "D:\". In this case, if the computing device allocates identifiers to the connected expansion disk 301 and the RAID 302 based on a traversal sequence of ports, the computing device 100 may allocate identifiers "C:\" and "D:\" to the expansion disk 301 and the RAID 302 respectively, which is contrary to the user's expectations. Therefore, the computing device 100 may generally adjust an internal hardware relationship of the computing device 100 to a connection relationship shown on the right side of FIG. 5, so that identifiers allocated by the computing device 100 to the expansion disk 301 and the RAID 302 based on the traversal sequence of ports meet the user's expectations. When the computing device 100 allocates an identifier to a PCIE device based on the correspondence defined by the user (the identifier corresponding to the port 0 is "D:\", and the identifier corresponding to the port 1 is "C:\"), identifiers actually allocated by the computing device 100 to the expansion disk 301 and the RAID 302 are "C:\" and "D:\" respectively, which meets the user's expectations. In this way, an identifier is allocated to a PCIE device based on the correspondence specified by the user, to reduce the hardware design difficulty of the computing device 100.

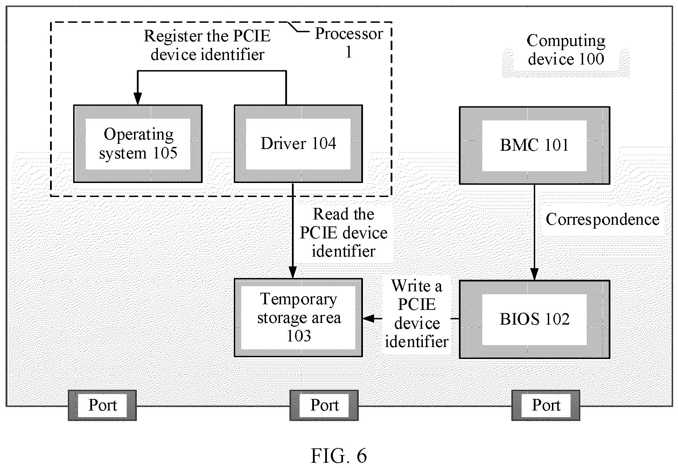

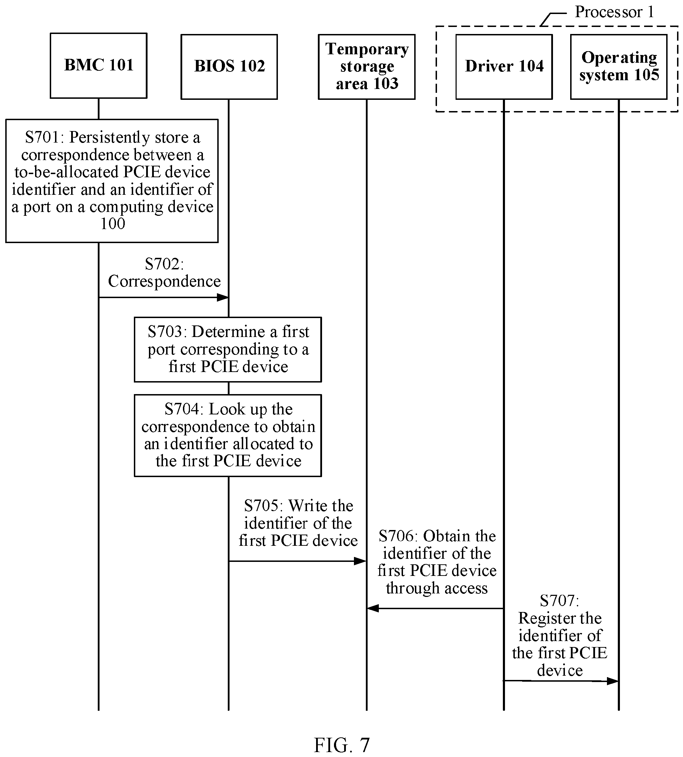

In the foregoing embodiment, the process of allocating an identifier to a PCIE device is described from an overall perspective of the computing device 100. With reference to FIG. 6 and FIG. 7, a specific process of allocating an identifier to a PCIE device by the computing device 100 is described below from an internal implementation perspective of the computing device 100. FIG. 6 is a schematic diagram of a specific structure of a computing device 100. The computing device 100 includes a BMC 101, a basic input/output system (basic input/output system, BIOS) 102, a temporary storage area 103, a driver 104, and an operating system 105. The driver 104 and the operating system 105 may be located in a same processor 1. The BIOS 102 and the temporary storage area 103 may be deployed in the processor 1, or may be deployed independent of the processor 1, for example, deployed in a processor 2. The BMC 101 is deployed independent of the processor 1 (and the processor 2). Based on the computing device 100 shown in FIG. 6, a method for allocating a PCIE device identifier shown in FIG. 7 may specifically include the following steps.

Step S701: The BMC 101 persistently stores in advance a correspondence between a to-be-allocated PCIE device identifier and an identifier of a port on the computing device 100 before the computing device 100 is started.

The correspondence between the to-be-allocated PCIE device identifier and the identifier of the port on the computing device 100 may be imported, before the computing device 100 is started, into the BMC 101 by a user in advance through an interface externally provided by the BMC 101. Alternatively, the BMC 101 may provide a corresponding configuration interface, and the user completes configuration for the correspondence in the configuration interface, so that the BMC 101 can generate and persistently store the correspondence based on a configuration operation performed by the user. In this embodiment, for a specific implementation of the BMC 101 obtaining the correspondence, refer to related descriptions of the computing device 100 obtaining the correspondence in the foregoing embodiment. Details are not described herein again.

Step S702: The BIOS 102 obtains the correspondence stored in the BMC 101.

Generally, in a start process, the computing device 100 may first run the BIOS 102. When run, the BIOS 102 may initialize the computing device 100, test hardware components, and load a boot program from a mass storage device (such as a hard disk), so that the boot program loads the operating system 105. Based on this, the BIOS 102 may further access the BMC 101 to obtain the correspondence persistently stored in the BMC 101.

Step S703: The BIOS 102 may determine a first port that connects the computing device 100 to a first PCIE device.

Step S704: The BIOS 102 looks up, based on an identifier of the first port, the correspondence obtained from the BMC 101 to obtain an identifier allocated to the first PCIE device.

In this embodiment, for specific implementation processes of step S703 and step S704, refer to related descriptions in the foregoing embodiments. Details are not described herein again.

Step S705: The BIOS 102 writes the found identifier allocated to the first PCIE device into the temporary storage area 103 in the computing device 100.

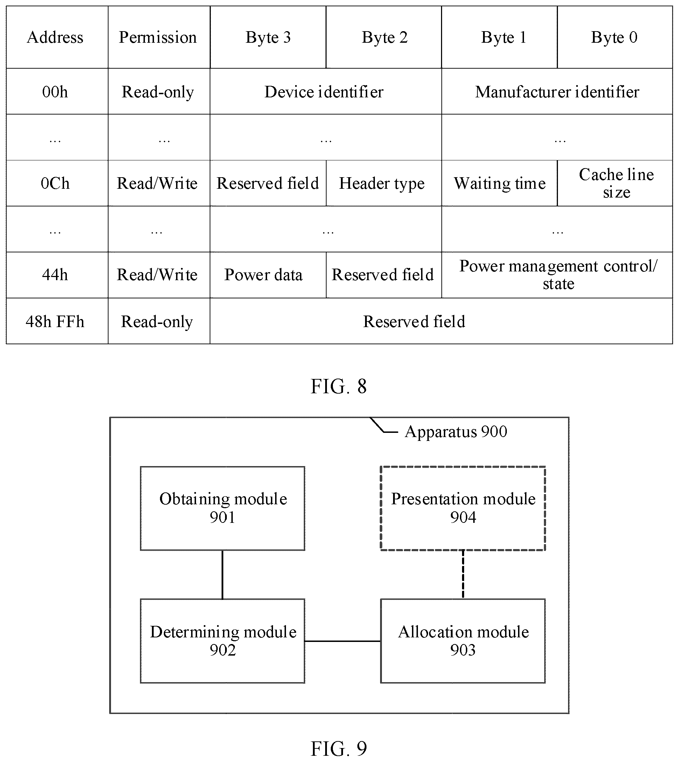

As an implementation example, the temporary storage area 103 in the computing device 100 may be specifically a register in the computing device 100, for example, a register configured based on a PCI standard or a PCIE standard. Therefore, when writing the identifier allocated to the first PCIE device into the register, the BIOS 102 may specifically write the identifier of the first PCIE device into a reserved field that supports data writing in the register. For example, for a register configured based on the PCI standard, the BIOS 102 can write the identifier of the first PCIE device into a reserved field of a 0Ch address or a reserved field of a 44h address shown in FIG. 8.

Moreover, in another embodiment, the temporary storage area 103 may also be implemented in another manner, for example, a register configured based on another protocol standard, or a cache area on the computing device 100. This is not limited in this application.

Step S706: The driver 104 corresponding to the first PCIE device accesses the temporary storage area 103, to obtain the identifier allocated to the first PCIE device.

In this embodiment, after the BIOS 102 loads and starts the operating system 105 based on the boot program, the operating system 105 can load and run the driver 104 corresponding to the first PCIE device, so that the driver 104 can read the identifier of the first PCIE device stored in the temporary storage area 103.

Step S707. The driver 104 registers the identifier of the first PCIE device with the operating system 105.

In this embodiment, after the computing device 100 finishes registering the identifier of the first PCIE device with the operating system 105, the operating system 105 may learn the identifier of the first PCIE device, so that when the computing device 100 subsequently runs a service and needs to access the first PCIE device, the computing device 100 may access the first PCIE device based on the registered identifier of the first PCIE device.

It should be noted that, in the foregoing embodiment, an example in which the user imports or configures the correspondence in the BMC 101 is used for description. In another possible embodiment, the user may directly configure the BIOS 102 during running of the BIOS 102, so that the BIOS 102 may obtain and persistently store the correspondence based on the configuration operation performed by the user without obtaining the correspondence from the BMC 101.

It should be noted that another reasonable step combination that can be figured out by a person skilled in the art based on the foregoing described content also fall within the protection scope of this application. In addition, it also should be learned by a person skilled in the art that all embodiments described in this specification are preferred embodiments, and the included operations are not necessary in this application.

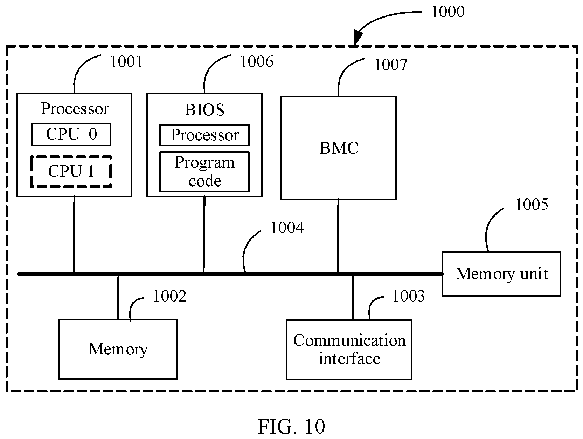

With reference to FIG. 1 to FIG. 8, the foregoing describes in detail the method for allocating a PCIE device identifier according to this application. With reference to FIG. 9 and FIG. 10, the following describes an apparatus for allocating a PCIE device and a computing device according to this application.

FIG. 9 is a schematic diagram of a structure of an apparatus for allocating a PCIE device identifier according to this application. As shown in FIG. 9, an apparatus 900 for allocating a PCIE device identifier may include:
an obtaining module 901, configured to obtain a correspondence between a to-be-allocated PCIE device identifier and an identifier of a port on the computing device. The correspondence is persistently stored in the computing device;
a determining module 902, configured to determine a first port that connects the first PCIE device to the computing device; and
an allocation module 903, configured to allocate an identifier to the first PCIE device based on an identifier of the first port and the correspondence.

In a possible implementation, the allocation module 903 is configured to:
look up the correspondence based on the identifier of the first port to obtain the identifier allocated to the first PCIE device;
write the identifier allocated to the first PCIE device into a temporary storage area in the computing device; and
register, by using a driver of the first PCIE device, the identifier of the first PCIE device stored in the temporary storage area with an operating system of the computing device.

In a possible implementation, the temporary storage area includes a register configured based on a PCI standard or a PCIE standard.

In a possible implementation, the obtaining module 901 is configured to:
obtain a configuration file, where the configuration file includes the correspondence; and
store the configuration file persistently.

In a possible implementation, the obtaining module 901 is configured to:
generate the configuration file based on a configuration operation performed by a user for the correspondence in a configuration interface; or
receive a configuration file imported by a user.

In a possible implementation, the obtaining module 901 is configured to:
obtain historical allocation data, where the historical allocation data includes a port through which the computing device is connected to a PCIE device in a historical period of time and an identifier allocated to the PCIE device in the historical period of time; and
generate the configuration file based on the historical allocation data.

In a possible implementation, the apparatus 900 further includes: a presentation module 904, configured to present an interaction interface, where the interaction interface includes the correspondence.

It should be understood that the apparatus 900 for allocating a PCIE device identifier in an embodiment of this application may be implemented through a CPU or an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. When the methods for allocating a PCIE device identifier shown in FIG. 1 to FIG. 8 may also be implemented through software, the apparatus 900 for allocating a PCIE device identifier and modules thereof may also be software modules.

The apparatus 900 for allocating a PCIE device identifier according to an embodiment of this application may correspondingly perform the method described in embodiments of this application, and the foregoing and other operations and/or functions of the modules of the apparatus 900 for allocating a PCIE device identifier are respectively used to implement corresponding processes of each method in FIG. 3 and FIG. 7. For brevity, details are not described herein again.

In this embodiment, because the apparatus 900 for allocating a PCIE device identifier allocates the identifier to the first PCIE device based on the persistently stored correspondence between the identifier of the port and the to-be-allocated PCIE device identifier, identifiers allocated by the apparatus 900 for allocating a PCIE device identifier to PCIE devices every time may be constant, thereby preventing the identifiers allocated by the computing device to the PCIE devices from changing and affecting services on the computing device.

FIG. 10 is a schematic diagram of a computing device 1000 according to this application. As shown in the figure, the computing device 1000 includes a processor 1001, a memory 1002, a communication interface 1003, a memory unit 1005, a basic input/output system BIOS chip 1006, and a baseboard manager controller BMC 1007. The processor 1001, the memory 1002, the communication interface 1003, the BIOS chip 1006, and the BMC 1007 communicate with each other through a bus 1004, or may implement communication through another means such as wireless transmission. The bus 1004 may further include a power bus, a control bus, a status signal bus, and the like, in addition to a data bus. However, for clear description, various types of buses in the figure are marked as the bus 1004. When the BIOS chip 1006 communicates with the BMC 1007 through the bus 1004, for example, obtains a correspondence that is between a to-be-allocated PCIE device identifier and an identifier of a port and that is stored in the BMC 1007, the bus 1004 may be, for example, a low pin count (low pin count, LPC) bus, a serial peripheral interface (serial peripheral interface, SPI) bus, and the like.

It should be understood that, in an embodiment of this application, the BIOS chip 1006 may be a CPU. The BIOS chip 1006 may be another general-purpose processor, a digital signal processor (DSP), an application-specific integrated circuit (ASIC), a field-programmable gate array (FPGA), or another programmable logic device, a discrete gate or a transistor logic device, a discrete device component, or the like. The general-purpose processor may be a microprocessor, any conventional processor, or the like. The BIOS chip 1006 may further include a memory (not shown in FIG. 10), so that the BIOS chip 1006 can read program code stored in the memory to perform the following operations:
obtaining a correspondence between a to-be-allocated peripheral component interconnect express PCIE device identifier and an identifier of a port on the computing device, where the correspondence is persistently stored in the computing device;
determining a first port that connects the first PCIE device to the computing device; and
allocating an identifier to the first PCIE device based on the identifier of the first port and the correspondence.

In a possible implementation, the BIOS chip 1006 may alternatively be a memory (for example, a flash memory (Flash)), configured to store program code, so that another processor executes the program code in the BIOS chip 1006 to implement the foregoing operations.

The processor 1001 may be a CPU. The processor 1001 may be another general-purpose processor, a digital signal processor (DSP), an application-specific integrated circuit (ASIC), a field-programmable gate array (FPGA), or another programmable logic device, a discrete gate or a transistor logic device, a discrete device component, or the like.

The memory 1002 may include a read-only memory and a random access memory, and provide instructions and data for the processor 1001. The memory 1002 may further include a non-volatile random access memory.

The memory 1002 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, but not limitation, many forms of RAMs are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 1003 is configured to communicate with another device connected to the computing device 1000.

The BMC 1007 may include a processor (for example, a CPU). The processor in the BMC 1007 may also include another general-purpose processor, a digital signal processor (DSP), an application-specific integrated circuit (ASIC), a field-programmable gate array (FPGA) or another programmable logic device, a discrete gate or a transistor logic device, a discrete device component, or the like. The general-purpose processor may be a microprocessor, any conventional processor, or the like. Further, the BMC 1007 may include a memory, a communication interface, and a memory unit (not shown in FIG. 10). In addition, the processor, the memory, the communication interface, and the memory unit in the BMC 1007 may communicate with each other through a bus. Specific implementations of the processor, the memory, the communication interface, the memory unit, and the bus in the BMC 1007 are similar to specific implementations of the processor 1001, the memory 1002, the communication interface 1003, the bus 1004, and the memory unit 1005. For details, refer to related descriptions in the foregoing embodiments. Details are not described herein again.

It should be understood that the computing device 1000 according to an embodiment of this application may correspond to the apparatus 900 for allocating a PCIE device identifier in an embodiment of this application, and may correspond to the computing device 100 in the method shown in FIG. 3 in an embodiment of this application. In addition, the foregoing and other operations and/or functions implemented by the computing device 1000 are respectively intended to implement corresponding procedures of the methods in FIG. 3. For brevity, details are not described herein again.

In a possible implementation, this application further provides a BIOS chip. A structure of the BIOS chip is shown in FIG. 10, and is configured to implement a corresponding procedure in the method shown in FIG. 3. For brevity, details are not described herein again.

All or some of the foregoing embodiments may be implemented through software, hardware, firmware, or any combination thereof. When software is used to implement embodiments, all or some of the foregoing embodiments may be implemented in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium, or the like. The semiconductor medium may be a solid state drive (solid state drive, SSD).

The foregoing descriptions are merely specific implementations of this application, but are not intended to limit the protection scope of this application. Any modification or replacement readily conceived by a person skilled in the art within the technical scope disclosed in this application shall fall within the protection scope of this application. Therefore, the protection scope of this application shall be subject to the protection scope of the claims.

## Claims

1. A method for allocating a PCIE device identifier, wherein the method is applied to a computing device, and the method comprises:
obtaining a correspondence between a to-be-allocated peripheral component interconnect express PCIE device identifier and an identifier of a port on the computing device, wherein the correspondence is persistently stored in the computing device;
determining a first port that connects the first PCIE device to the computing device; and
allocating an identifier to the first PCIE device based on an identifier of the first port and the correspondence.

2. The method according to claim 1, wherein the allocating an identifier to the first PCIE device based on an identifier of the first port and the correspondence comprises:
looking up the correspondence based on the identifier of the first port to obtain the identifier allocated to the first PCIE device;
writing the identifier allocated to the first PCIE device into a temporary storage area in the computing device; and
registering, by using a driver of the first PCIE device, the identifier of the first PCIE device stored in the temporary storage area with an operating system of the computing device.

3. The method according to claim 2, wherein the temporary storage area comprises a register configured based on a peripheral component interconnect PCI standard or a PCIE standard.

4. The method according to any one of claims 1 to 3, wherein a process of storing the correspondence persistently comprises:
obtaining a configuration file, wherein the configuration file comprises the correspondence; and
storing the configuration file persistently.

5. The method according to claim 4, wherein the obtaining a configuration file comprises:
generating the configuration file based on a configuration operation performed by a user for the correspondence in a configuration interface; or
receiving a configuration file imported by a user.

6. The method according to claim 4, wherein the obtaining a configuration file comprises:
obtaining historical allocation data, wherein the historical allocation data comprises a port through which the computing device is connected to a PCIE device in a historical period of time and an identifier allocated to the PCIE device in the historical period of time; and
generating the configuration file based on the historical allocation data.

7. The method according to claim 6, wherein the method further comprises:
presenting an interaction interface, wherein the interaction interface comprises the correspondence.

8. An apparatus for allocating a PCIE device identifier, wherein the apparatus is used in a computing device, and the apparatus comprises:
an obtaining module, configured to obtain a correspondence between a to-be-allocated peripheral component interconnect express PCIE device identifier and an identifier of a port on the computing device, wherein the correspondence is persistently stored in the computing device;
a determining module, configured to determine a first port that connects the first PCIE device to the computing device; and
an allocation module, configured to allocate an identifier to the first PCIE device based on an identifier of the first port and the correspondence.

9. The apparatus according to claim 8, wherein the allocation module is configured to:
look up the correspondence based on the identifier of the first port to obtain the identifier allocated to the first PCIE device;
write the identifier allocated to the first PCIE device into a temporary storage area in the computing device; and
register, by using a driver of the first PCIE device, the identifier of the first PCIE device stored in the temporary storage area with an operating system of the computing device.

10. The apparatus according to claim 9, wherein the temporary storage area comprises a register configured based on a peripheral component interconnect PCI standard or a PCIE standard.

11. The apparatus according to any one of claims 8 to 10, wherein the obtaining module is configured to:
obtain a configuration file, wherein the configuration file comprises the correspondence; and
store the configuration file persistently.

12. The apparatus according to claim 11, wherein the obtaining module is configured to:
generate the configuration file based on a configuration operation performed by a user for the correspondence in a configuration interface; or
receive a configuration file imported by a user.

13. The apparatus according to claim 11, wherein the obtaining module is configured to:
obtain historical allocation data, wherein the historical allocation data comprises a port through which the computing device is connected to a PCIE device in a historical period of time and an identifier allocated to the PCIE device in the historical period of time; and
generate the configuration file based on the historical allocation data.

14. The apparatus of claim 13, wherein the apparatus further comprises:
a presentation module, configured to present an interaction interface, wherein the interaction interface comprises the correspondence.

15. A computing device, comprising a processor and a memory, wherein the memory is configured to store computer instructions, and the processor is configured to perform, based on the computer instructions, the operation steps of the method according to any one of claims 1 to 7.

16. A computer-readable storage medium, comprising instructions, wherein when run on a computing device, the instructions enable the computing device to perform the operation steps of the method according to any one of claims 1 to 7.
